# EUROPEAN PATENT SPECIFICATION

(11) **EP 0 412 775 B1**
(45) Date of publication and mention of the grant of the patent: **03.11.1993**
(21) Application number: 90308676.7
(22) Date of filing: 07.08.1990
(51) Int. Cl.: B60C 9/20

(54) **Pneumatic tyre**
Luftreifen
Bandage pneumatique

(30) Priority: 10.08.1989 JP 209295/89; 15.08.1989 JP 211161/89
(43) Date of publication of application: 13.02.1991
(73) Proprietor: SUMITOMO RUBBER INDUSTRIES LIMITED, Kobe-shi Hyogo-ken (JP)
(72) Inventor: Nakasaki, Eiji, Kakogawa-shi, Hyogo-ken (JP)
(74) Representative: Stewart, Charles Geoffrey

(56) References cited:
- DE-A- 2 040 536
- FR-A- 2 338 811
- FR-A- 2 536 018
- US-A- 4 815 514
- US-A- 4 942 914

## Description

This invention relates to a pneumatic tyre and particularly to a tyre in which the rigidities in the crown and shoulder parts of the tread part are well balanced to reduce vibration in use and to improve ride comfort, steering stability and durability.

Improvements to the rigidity of the tread parts of a pneumatic tyre have been sought by using a belt layer comprising belt reinforcement plies outside the carcass and under the tread. Such tyres have a rigidity which reduces towards the shoulders compared to the centre of the tread in the area of the tyre's equator. Indeed it is found that as the tread width is wider and the depression ratio is lower, the tread radius tends to be flatter, and the resultant cornering force of the tyre is increased.

It is known that the rigidity of the belt layer is remarkably increased because of the hoop effect of the inter-reacting plurality of belt ply layers having the cords of adjacent layers placed in different directions.

On the other hand, the shape of the tread part is significantly changed in the shoulder parts when driving. In view of this both edges of the belt plies are extended near to the shoulders to control such change in shape and avoid peel-off and deviational wear of the belt ply edges. The rigidity of the tread part can be improved by this structure.

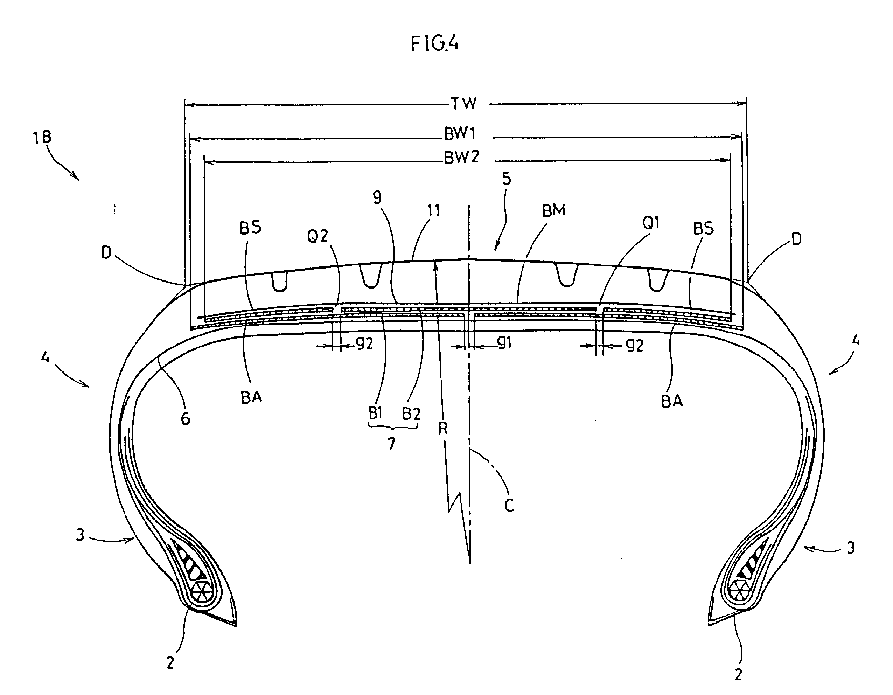

However, since the cords of the belt plies are crossed, the hoop effect between the belt plies is strong. Moreover, as the plurality of belt plies are united, they are further stiffened. Therefore, if the depression ratio is reduced, the tread surface tends to have a reverse warp r as shown in Figure 4, and, as a result, the high-speed durability is reduced, vibrations are increased and the ride comfort is reduced.

In addition the distribution of ground-contact pressure is uneven and the shoulder parts have a higher pressure than the central part. As a result, uneven wear occurs between the shoulder parts and the central parts of the tread which is a problem in reducing the durability or life of the tyre.

Whilst a tyre having a depression ratio of 70% or less particularly, is superior in ground contact performance, the aforementioned tendency is then significant and when the belt plies comprise steel cords, since the rigidity of such belt plies is very high, then a great reverse warp is caused in the tread surface.

A type according to the preamble of claim 1 is known, e.g. from DE-A-2 040 536.

It is a primary object of the invention to provide a pneumatic tyre that has improved ride comfort, wear resistance and high-speed durability.

This object is achieved by the features of claim 1.

According to the present invention a pneumatic tyre comprises a carcass extending from a tread part through sidewalls and wrapped around a bead core in each of two beads and a belt layer placed radially outside the carcass in the tread part, wherein the belt layer includes a first belt ply B1 and a second belt ply B2 positioned in sequence from the carcass, the width BW1 of the first belt ply B1 in the direction of the axis being more than 0.9 times the tread width TW that is the distance between the outer edges of the tread in the direction of the tyre's axis and less than 0.95 times the tread width TW, the width BW2 of the second belt ply B2 in the direction of the tyre's axis being more than 0.88 times the tread width TW and less than 0.92 times of the tread width TW, one of the belt plies B1 or B2 being divided into and composed of two belt ply parts BA separated by a gap g1 on the tyre's equator C, and the other belt ply B2 or B1 being divided into and composed of a middle belt ply part BM and two side-belt ply parts BS which are separated by a gap g2 at two division points each spaced apart by a distance of 0.2 to 0.3 times the width of one of the belt plies BW1 or BW2 from the tyre's equator C to both sides of the direction of tyre's axis.

In addition, the initial elasticity EA of the belt cords of the middle belt ply part BM is preferably larger than the initial elastic modulus EB of the belt cords of the other belt ply parts BA and BS, and the ratio EA/EB of initial elasticity EA of the middle belt ply part BM to the initial elasticity EB of the belt cords of the other belt ply parts BS and BA is preferably in the range of 2.0 to 4.0. It is also preferred that both gaps g1 and g2 are 0.5mm to 4mm.

A band layer comprising cords or organic fibres may also be provided outside said belt layer.

It is preferred that the band layer comprises one or more layers of a spiral band ply formed by winding band cords spirally or two or more cut end plies of band cords inclined at an angle of 30 degrees to 60 degrees to the tyre's equator C with both edges cut.

Since the maximum and minimum widths of the first and second belt plies B1 and B2 are specified with respect to the tread width the required rigidity in the outer edge of the tread part is provided and the steering stability and ride comfort can be guaranteed.

On the other hand, by dividing one of the belt plies into three parts and the other into two parts and separating the parts by gaps g1 and g2, respectively, the lateral force generated in the belt cords is not conducted to all the belt plies in cornering or passing over a convex hump or bump on the road and so the handling performance too is guaranteed. In addition, since the peel-off in the edge parts of the belt plies that has tended to be caused by such lateral force is resisted, the durability is improved.

Moreover, as the gap g1 in one belt ply and the gap g2 in the other belt ply are placed in different positions, the rigidity of the tread part in the radial direction is also maintained.

It is preferred that the initial elasticity EA of the belt cords of the middle belt ply part BM is larger than the initial elasticity EB of the other belt ply parts BA and BS. By this arrangement, the rigidity of the tread part in the radial direction of the central part extending over the tyre's equator C is increased. Additionally the ground-contact pressures in the central part and shoulder parts are made equal even for the case of a depressed tyre with a depression ratio of 70% or less and so the steering stability is superior and durability is improved by avoiding uneven wear. In the case where the band layer is formed outside the belt layer and divided in such a manner, because the heterogeneous rigidity of the belt layer in the radial direction is supplemented by the band layer, the belt ply parts BA, BA, BM, BS and BS may be formed to have the same initial elasticity. More preferably, the initial elasticity EA should be larger than EB even in the case of using a band layer. The band layer can thus help to improve the straightforward performance as well because ply steer which is otherwise caused by the inclination of the cords of the second belt ply is removed.

Thus, the aforementioned structures are combined and united to mutually avoid disadvantages and improve overall steering stability and high-speed durability.

An embodiment of the present invention will now be described by way of example, referring to the attached diagrammatic drawings, in which:
Figure 1 is a sectional view showing one of the embodiments of the invention;
Figure 2 is a plan development view showing the structure of the belt ply of Figure 1;
Figure 3 is a sectional view showing another embodiment;
Figure 4 is a sectional view showing another embodiment;
Figure 5 is a plan view showing the structure of the belt of Figure 4;
Figure 6 is a sectional view showing yet another embodiment; and

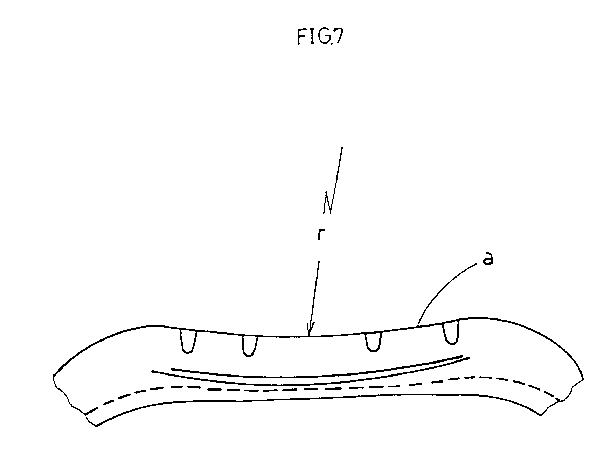

Figure 7 is a sectional view showing conventional technologies.

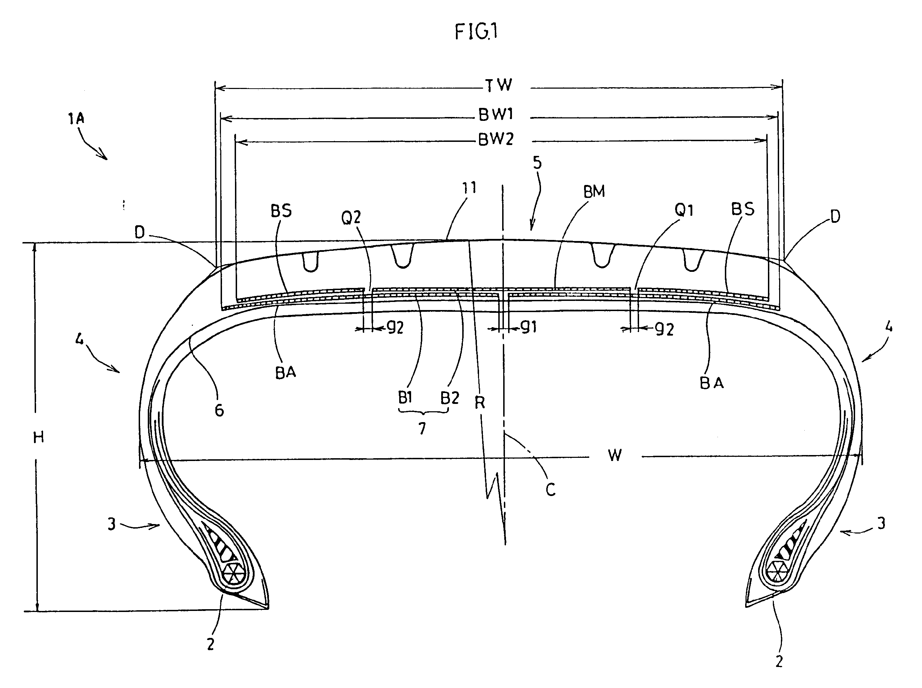

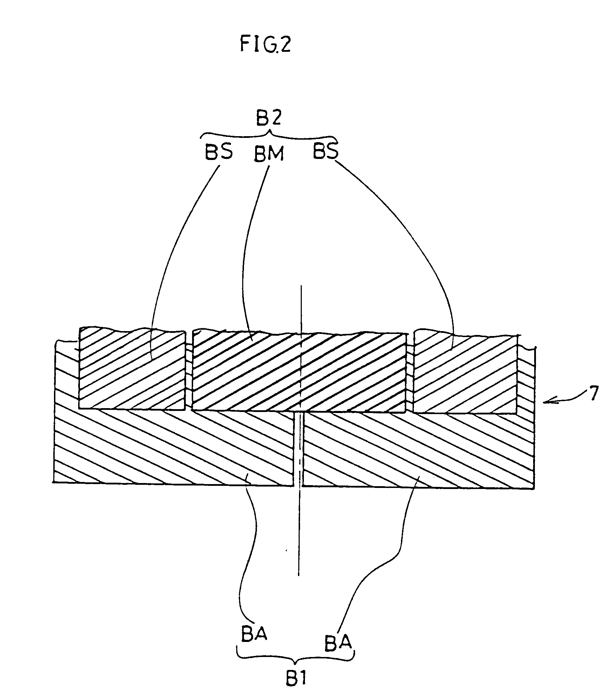

As shown in Figures 1 and 2, a tyre 1A comprises beads 3 each including a bead core 2, and sidewalls 4 extending one from each bead 3 outwardly in the radial direction of the tyre to a tread part 5 that connects the outer ends. A carcass 6 extends around the tyre through the tread part a through the sidewalls 4 to the beads 3 and folded at each edge about the bead core 2. A belt layer 7 is placed under the tread part 5 outside the carcass 6 in the radial direction of the tyre.

The carcass 6 is a semi-radial or radial arrangement of carcass cords at 45 to 90 degrees to the tyre's equator C. Fibre cords such as nylon, polyester and rayon as well as steel cords may be used for the carcass cords.

The belt layer 7 of the embodiment is composed of two layers comprising a first belt ply B1 and a second belt ply B2 in sequence from the carcass 6 outwardly in the radial direction, or, in other words, towards the outer surface 11 of the tread part 5.

The first and second belt plies B1 and B2 each comprise belt cords laid at an inclination to the centre line of the tread and equator of the tyre.

As shown in Figure 2, the cords of the first belt ply B1 of the embodiment are at an inclination of 15 to 70 degrees to the tyre's equator C to the left side and the second belt ply B2 cords are at an inclination of 15 to 70 degrees reversely to the first belt ply B1 i.e. to the right side. Thus, the cords of the first and second belt plies B1 and B2 are mutually crossed, to produce a high hoop effect. As a result, the rigidities of the tread part 5 in the circumferential and axial directions are improved.

The width BW1 of the first belt ply B1 in the direction of the tyre's axis is more than 0.9 times the tread width TW which is the length between the outer edges D of the tread part 5 in the direction of the tyre's axis and less than 0.95 times the tread width TW. Moreover, the width BW2 of the second belt ply B2 in the direction of the tyre's axis is more than 0.88 times the tread width TW and 0.92 times the tread width TW or less.

If the widths of the first and second belt plies B1 and B2 are less than the specified minimum limit, the rigidity is insufficient near the outer edges D of the tread part that is in the shoulder part. Thereby, the tendency of reverse warp in the middle of the tread part comes is increased to form a convex shape in the middle part. If the widths of the first and second belt plies B1 and B2 are more than the maximum limit, the rigidity of the tread part is excessive thereby causing inferior steering stability.

The width of the second belt ply B2 is less than that of the first belt ply B1. Thus, excessive sidewards extension of the edge of the second belt ply B2 is prevented, and separations that tend to be caused in the edges of the belt plies are prevented.

The first belt ply B1 comprises two belt ply parts Ba which are divided and separated by a gap g1 of 2mm or more and 4mm or less on the tyre's equator line C. The second belt ply B2 comprises a middle belt ply part BM and two side belt ply parts BS dividing the ply into three parts and separating them by a gap g2 which is 0.5mm or more and 4mm or less at two division points Q1 and Q2 0.2 to 0.3 times the width BW1 of the first belt ply B1 spaced to both sides in the direction of the tyre's axis.

Thus, the first and second belt plies B1 and B2 are divided into a different number of parts at different points in a diamond-checkered shape. As a result, the belt layer 7 can be formed without matching the gaps g1 and g2, and the elastic property of the tread part 5 is improved whilst maintaining the rigidity of the belt layer 7 in the axial direction and the rigidity in the radial direction of the tyre.

If the gaps g1 and g2 are less than 0.5mm, the handling performance deteriorates. In cornering or passing over a convex bump, a lateral force acts on the belt plies B1 and B2. However, the rubber between the gaps g1 and g2 is not enough to absorb the deviation of the belt parts caused by the lateral force, and the lateral force is conducted to the entire belt plies. If the gaps g1 and g2 exceed 4mm, the rigidity of the belt layer 7 in the radial direction of the tyre deteriorates in the gap parts, which tends to cause a reverse warp in the tread surface. As a result, the ground-contact pressure is made heterogeneous in the middle part and shoulder part, which deteriorates the handling performance and durability due to uneven wear.

For belt cords of the first and second belt plies B1 and B2, fibre cords having a relatively high elasticity such as nylon, polyester and rayon as well as Teflon (Registered Trade Mark of Du Pont), aromatic polyamide fibre and steel cords may be used.

The initial elasticity EA of cords of the middle belt ply part BM of the second belt ply B2 is more than the initial elasticity EB of the cords of the side belt ply parts BS and the belt ply parts BA of the first belt ply B1.

The ratio EA/EB is 2.0 or more and 4.0 or less. If the ratio EA/EB is less than 2.0, the rigidity in the middle of the tread part in the radial direction of the tyre deteriorates. As a result, the ground contact pressure in the central and shoulder parts are different, uneven wear tends to occurs, and the durability is inferior. On the contrary, when the ratio EA/EB exceeds 4.0, the rigidity in the central part is too great and the ride comfort deteriorates.

The radius of curvature R on the outer surface 11 of the tread part 5 forms a convex arc of 300mm or more and 360mm or less, when the tyre is mounted on its specified rim, and its specified internal pressure is applied.

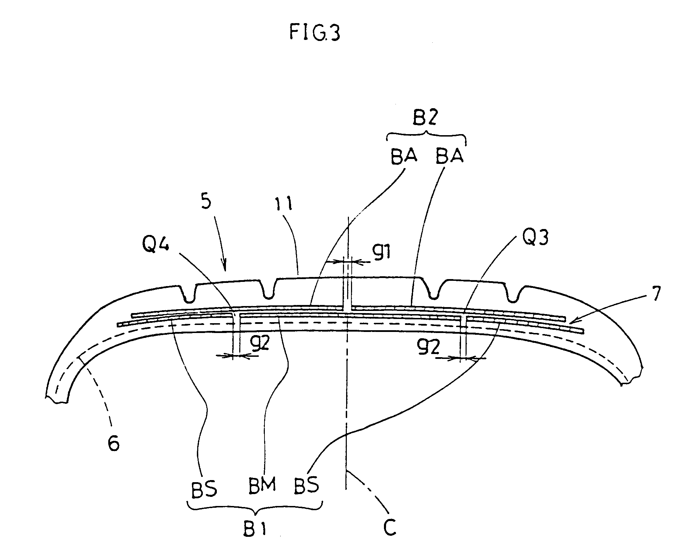

Another embodiment is shown in Figure 3 where the second belt ply B2 of the belt layer 7 comprises two belt ply parts BA divided on the tyre's equator C reversely to the structure shown in Figure 1. The first belt ply B1 is composed of a middle belt ply BM and two side belt plies BS by dividing it into three parts and separating them by a gap g2 at two division points Q3 and Q4 which are 0.2 to 0.3 times the width BW2 of the second belt ply B2 spaced to both sides in the direction of the tyre's axis.

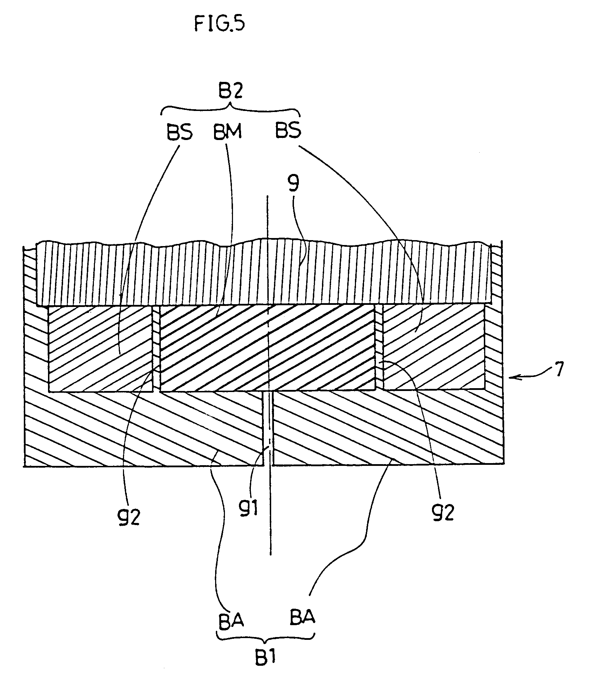

Figures 4 and 5 show a tyre 1B having a band layer 9 formed outside the belt layer 7 in the radial direction of the tyre 1B.

The band layer 9 is formed by a spiral band ply in which band cords composing organic fibres having a high expandability such as nylon and polyester are wound in a spiral shape approximately parallel to the tyre's equator C.

Two layers of inner and outer spiral band plies are overlaid in the embodiment, which are wound mutually in reverse directions. The width BW3 of the band layer 9 is wider than the width BW2 of the second belt ply B2.

Thus, by forming the width BW3 of band layer 9 to be wider than that of the second belt ply B2, both ends of the second belt ply B2 are covered. As a result, separations which tend to occur in the edges of the second belt ply B2 can be prevented. In addition, the band layer 9 can supplement the heterogeneity in rigidity of the divided belt layer 7. Therefore, the initial elasticities EA and EB may not be equal in the tyre 1B with the band layer 9.

The band layer 9 may be formed by overlaying two or more cut band plies comprising band cords of organic fibres in the structure of the band layer 9 inclined at an angle of 30 degrees or more and 60 degrees or less, preferably 40 degrees or more and 50 degrees or less, more preferably 45 degrees to the tyre's equator C with both ends cut, in which the band cords are mutually placed in different directions.

In the embodiments of Figure 5 the second belt ply B2 of the belt layer 7 comprises two belt ply parts BA divided on the tyre's equatorial line C reversely to the structure shown in Figure 1. The first belt ply B1 is composed of a middle belt ply BM and two side belt plies BS dividing it into three parts and separating them by a gap g2 at two division points Q3 and Q4 which are 0.2 and 0.3 times the width BW2 of the second belt ply B2 distant to both sides in the direction of the tyre's axis.

As working examples, prototypes of tyre 1A having dimensions of 255/40ZR17 were produced according to the specifications shown in Table 1 with the structure shown in Figure 1 or 3 and tested.

A carcass having the following specifications was used both in the embodiments and the conventional comparison tyre.
- Material of carcass cord: Polyester
- Thickness of cord: 1500d/2
- Cord ends: 49/5 cm
- Number of carcass plies: 2
- Inclination of cords: 90 degrees

The results of tests are shown in Table 2.

The tests were performed to the following specifications:

### 1) High speed durability test

The test was performed by mounting the tyre on a drum tests 1.6 m in diameter and having a smooth surface, applying the maximum load and maximum internal pressure specified by the JIS standard and running until breakage occurred starting from a speed of 160 km/h and increasing the speed by 10 km/h every 2 hours to achieve an index setting the value of conventional tyre 1 at 10 points. Higher scores show more superior performance, and 120 points and higher scores were approved test.

### 2) Ride comfort vibration test

The test was performed by forming an iron convex hump of 25mm in height on one part of a drum surface of 1.6 m in diameter, applying maximum design load and maximum internal pressure as specified in the JIS standard to the prototype tyres, and measuring the varying forces due to load in the horizontal and vertical directions of the fixing shaft to which the tyre is mounted when the tyre passed over the hump. The results are shown setting the conventional tyre at 100 points. A higher score of the index shows a smaller reaction, showing superiority in ride comfort. Scores of 101 points and higher were approved.

A speed of 60 to 120 km/h was employed for the high-speed test and a speed of 20 to 50 km/h for the low-speed test in the Table.

### 3) Field wear resistance test

The tyres were mounted on an actual automobile, driven for 40,000 km on freeways and general paved roads in the ratio of 1:1 and driving for a distance such that the tread was worn to 1mm. The results are shown by indices setting the conventional tyre at 100 points. Higher scores show better performance, and scores of 150 and higher were approved.

### 4) Field uneven wear test

The wear rate of the shoulder parts of the tyres which were tested in test 3) were shown by indices setting the wear rate of the crown rib part at 100 points. Scores nearer to 100 points show that the wear rates are more equal. Points in 100 + 2 were approved.

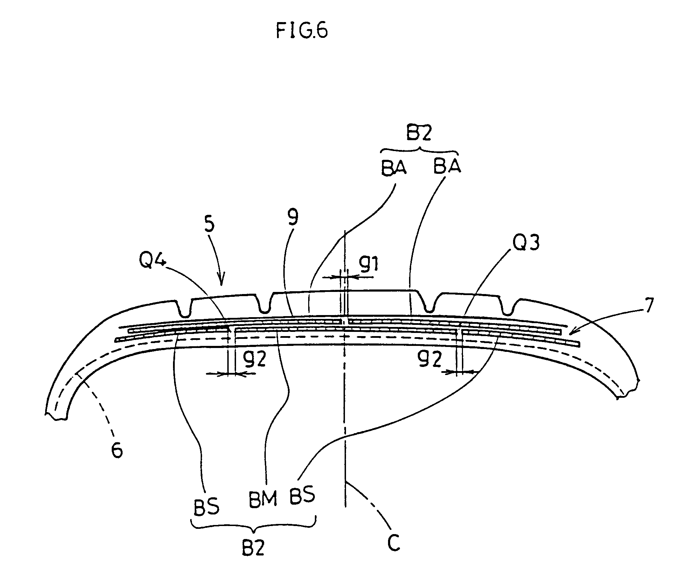

Further prototypes of the tyre 1B of the embodiment of Figures 4 to 6 having dimensions of 255/40ZR17 were produced in the same manner according to the specifications shown in Table 3. A high-speed durability test, a ride comfort vibration test, a field wear resistance test and a field uneven wear test were performed as in Example A. The results are shown for these tyres in Table 4.

Thus, the rigidity of the crown and shoulder parts can be set in good balance in the pneumatic tyre of the invention even in the case of a tyre with a small depression ratio. The durability is improved not only in low-speed driving but also in high-speed driving due to one of the belt plies of the belt layer being divided into three parts and the other into two parts with specified gaps formed between the parts, and the division points being arranged apart. In addition, vibration in driving is reduced to improve the ride comfort as well as improve the handling performance and steering stability.

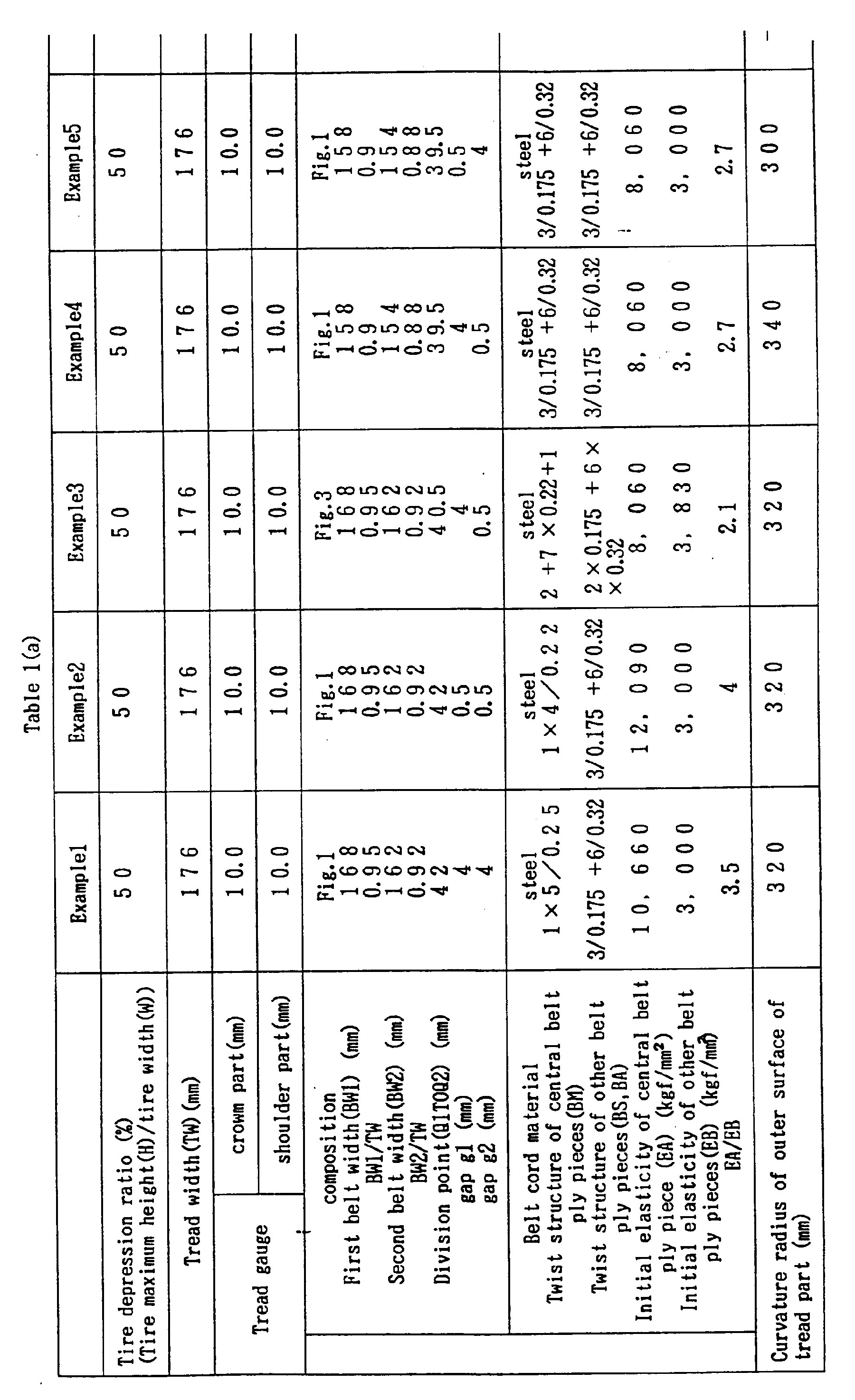

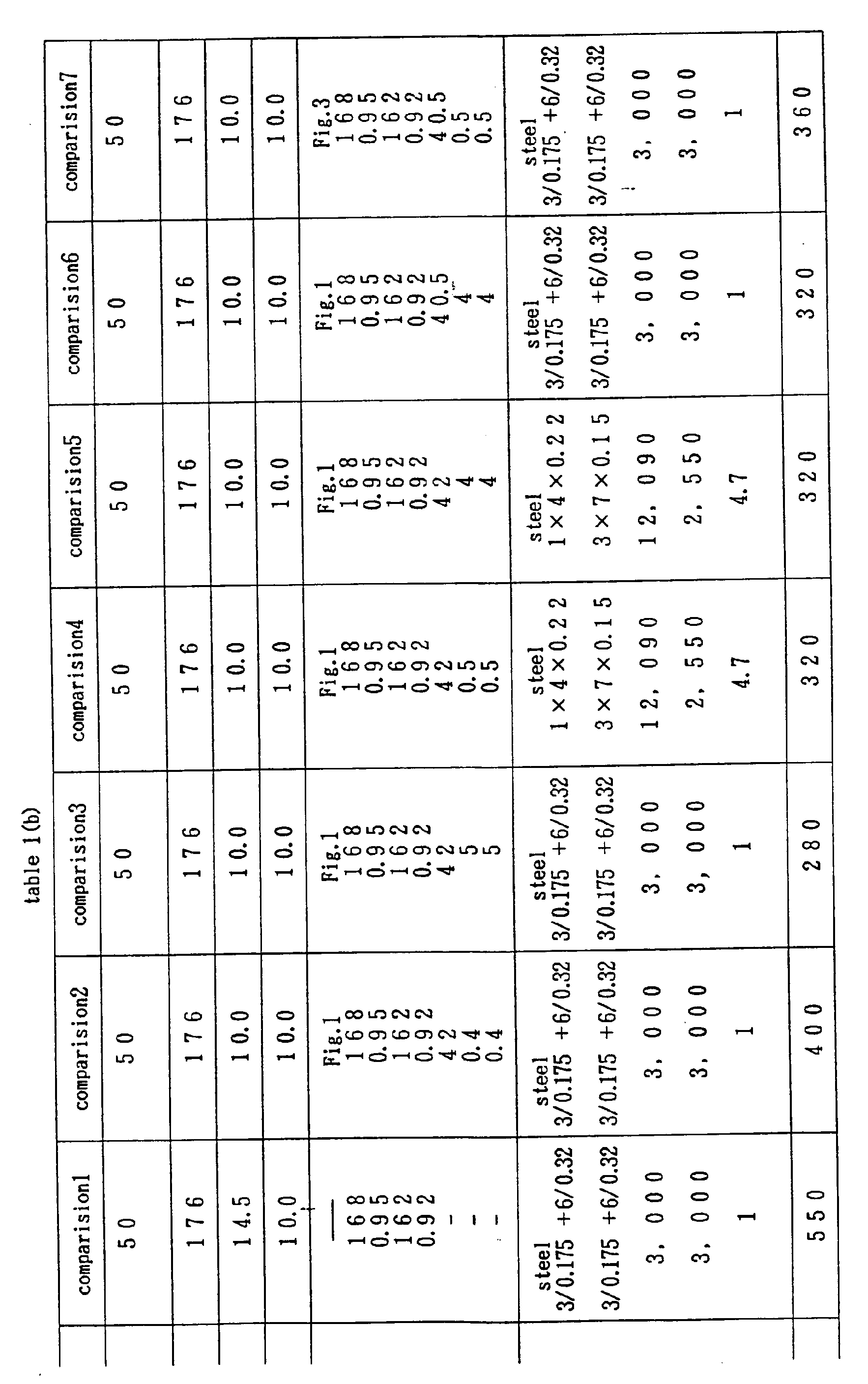

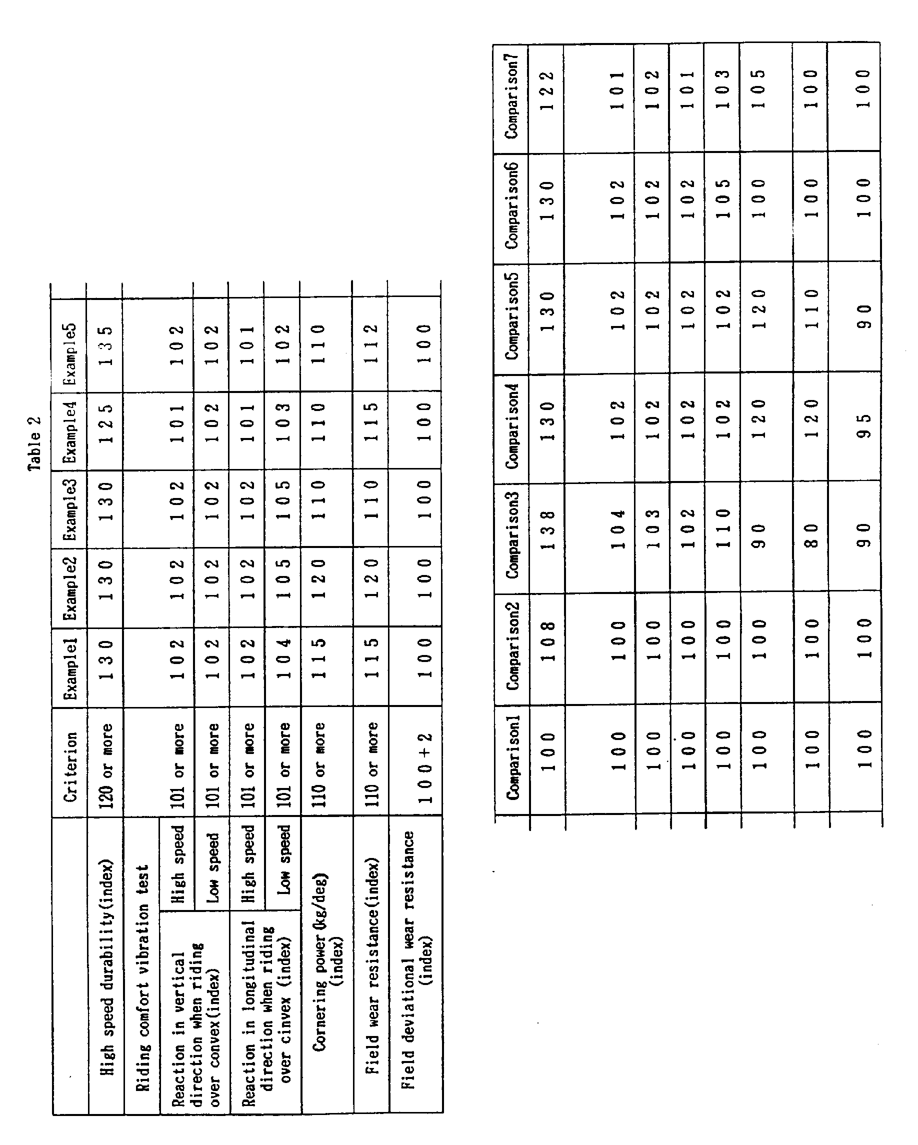

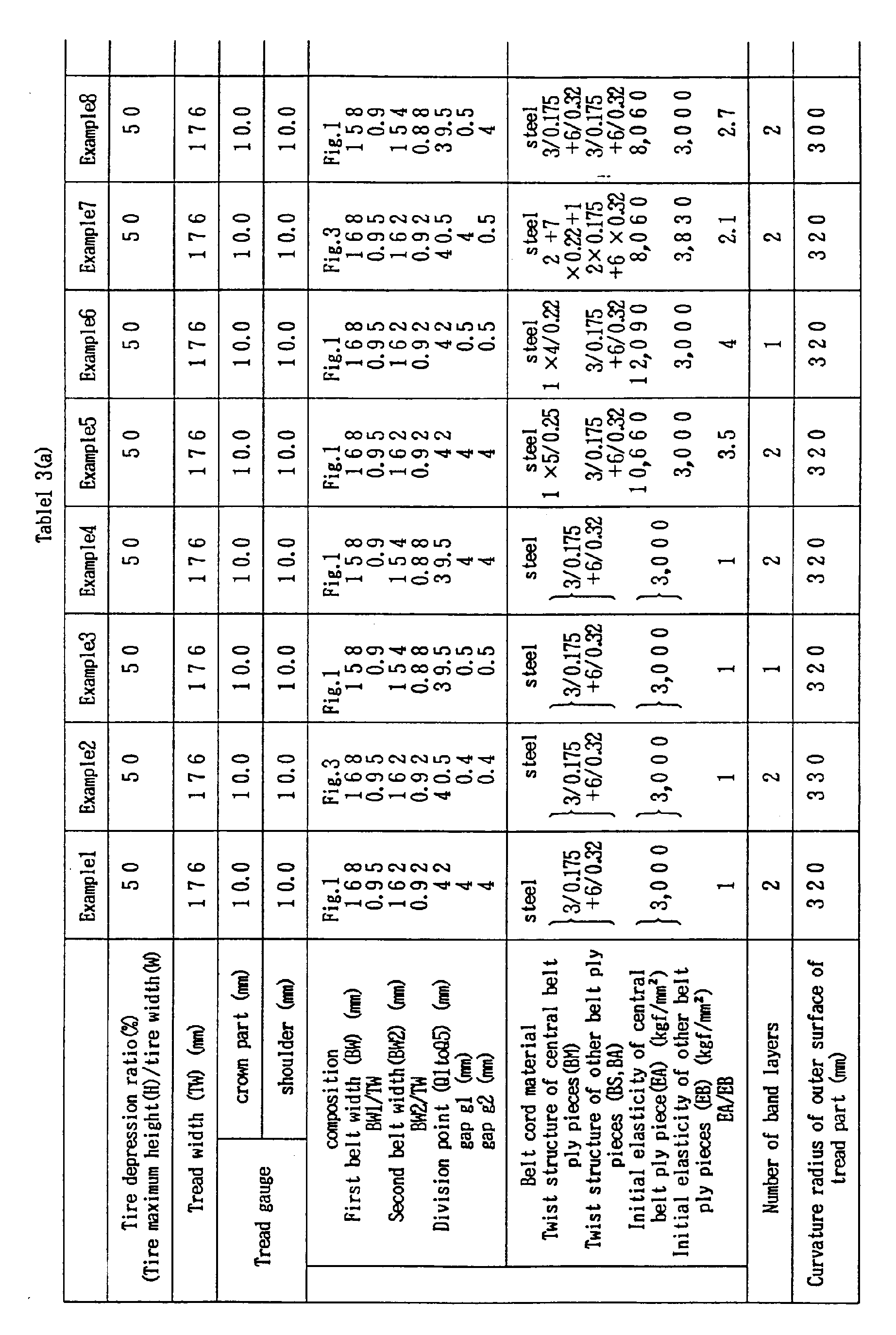

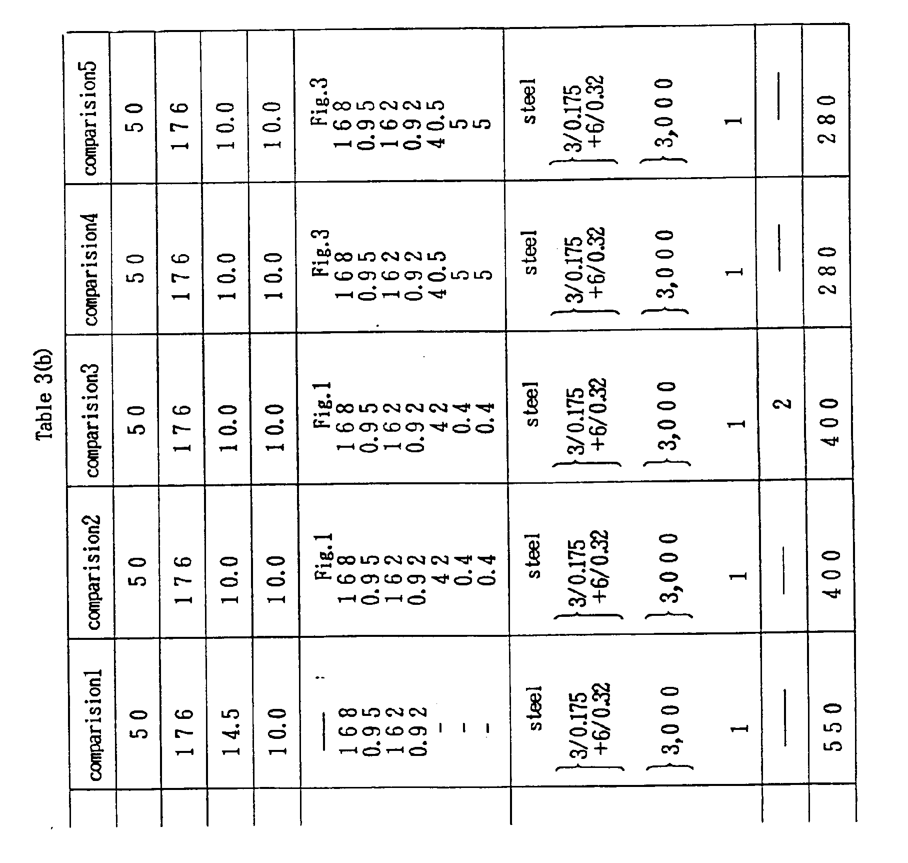

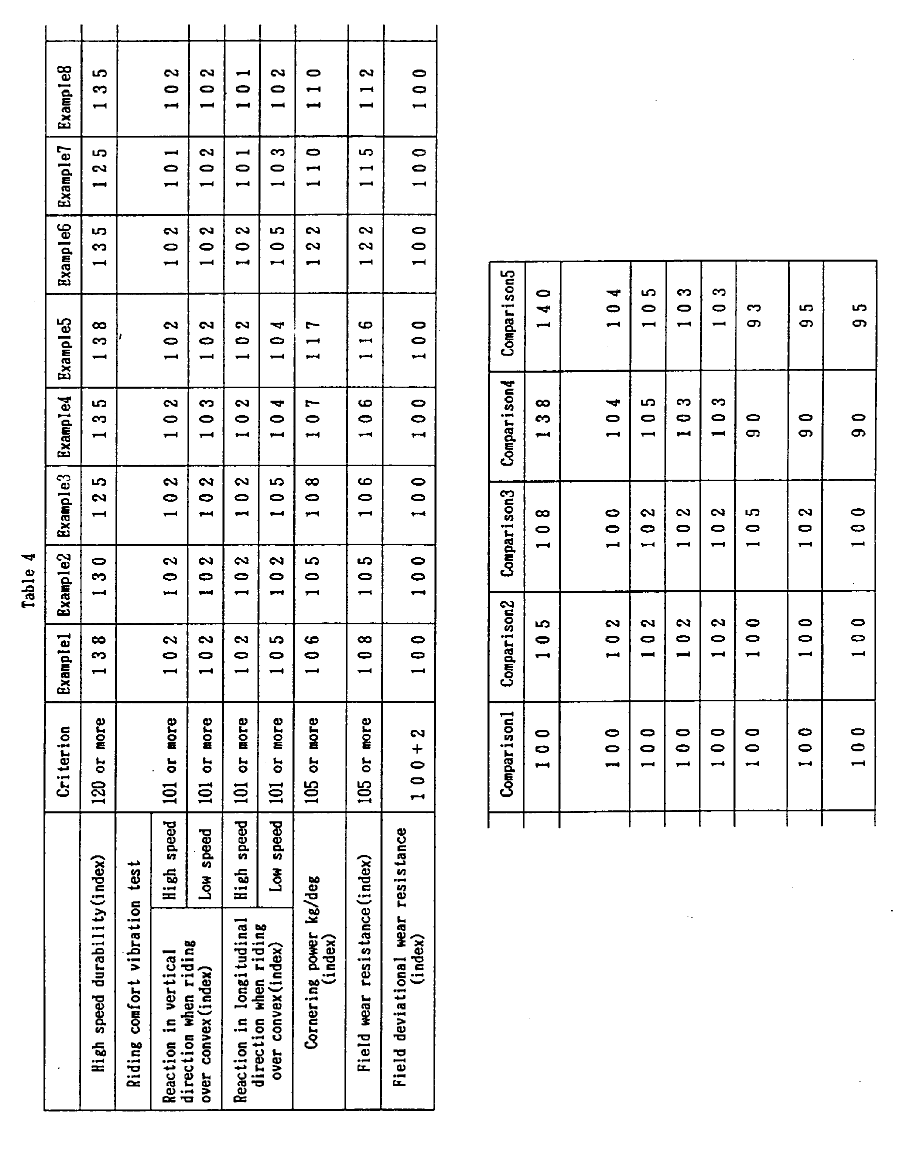

## Claims

1. A pneumatic tyre comprising a carcass (6) extending from a tread part (5) through sidewalls (4) and wrapped around a bead core (2) in each of two beads (3) and a belt layer (7) placed radially outside the carcass (6) in the tread part (5) the belt layer (7) including a first belt ply B1 and a second belt ply B2 positioned in sequence from the carcass (6), the widths BW1 and BW2 of the first and second belt plies in the direction of the axis being not more than the tread width TW that is the distance between the outer edges of the tread (5) in the direction of the tyre's axis and one of the belt plies (B1 or B2) being divided into and composed of two belt ply parts BA separated by a gap g1 on the tyre's equator C, characterised in that the width BW1 of the first belt ply is between 0,9 and 0.95 times the tread width TW, the width BW2 of the second belt ply B2 is between 0.88 and 0.92 times the tread width TW and the other belt ply (B2 or B1) is divided into and composed of a middle belt ply part BM and two side-belt ply parts BS which are separated by further gaps g2 at two division points each spaced apart by a distance of 0.2 to 0.3 times the width BW1 or BW2 of one of the belt plies (B1 or B2) from the tyre's equator C to both sides of the direction of tyre's axis.

2. A pneumatic tyre according to Claim 1, characterised in that the initial elasticity EA of the belt cords of the middle belt ply part BM is larger than the initial elasticity EB of the belt cords of the other belt ply parts BA and BS.

3. A pneumatic tyre according to Claim 2, characterised in that the ratio EA/EB between 2.0 and 4.0.

4. A pneumatic tyre according to Claim 1, 2 or 3 characterised in that both gaps g1 and g2 are between 0.5mm and 4mm.

5. A pneumatic tyre according to any of Claims 1 to 4, characterised by a band layer (9) comprising band reinforcement cords of organic fibre material positioned radially outside the belt layer (7).

6. A pneumatic tyre according to Claim 5, characterised in that the initial elasticity EA is the same as the initial elasticity EB.

7. A pneumatic tyre according to Claim 5 or 6, characterised in that the band layer (9) comprises one or more layers of spiral band ply formed by winding band cords spirally.

8. A pneumatic tyre according to Claim 5, 6 or 7 characterised in that the band layer (9) comprises two or more cut edge plies of band cords inclined at an angle of between 30 degrees and 60 degrees to the tyre's equator C with both edges cut.

## Patentansprüche

1. Ein Luftreifen mit einer Karkasse (6), welche sich von einem Laufflächenteil (5) durch Seitenwände (4) erstreckt und um einen Wulstkern (2) in jedem von zwei Wulsten (3) gewickelt ist, und einer Gürtelschicht (7), die radial außerhalb der Karkasse (6) in dem Laufflächenteil (5) angeordnet ist, wobei die Gürtelschicht (7) eine erste Gürtellage B1 und eine zweite Gürtellage B2 einschließt, die der Reihe nach von der Karkasse (6) positioniert sind, wobei die Breiten BW1 und BW2 der ersten und zweiten Gürtellagen in der Richtung der Achse nicht größer als die Laufflächenbreite TW, das heißt der Abstand zwischen den äußeren Kanten der Lauffläche (5) in der Richtung der Reifenachse, sind und eine der Gürtellagen (B1 oder B2) in zwei Gürtellagenteile BA geteilt ist und aus diesen besteht, die durch eine Lücke gl auf dem Reifenäquator C getrennt sind, dadurch gekennzeichnet, daß die Breite BW1 der ersten Gürtellage zwischen dem 0,9-fachen und 0,95-fachen der Laufflächenbreite TW liegt, die Breite BW2 der zweiten Gürtellage B2 zwischen dem 0,88-fachen und 0,92-fachen der Laufflächenbreite TW liegt und die andere Gürtellage (B2 oder B1) in einen mittleren Gürtellagenteil BM und zwei Seitengürtellagenteile BS geteilt ist und aus diesen besteht, die durch weitere Lücken g2 bei zwei Teilungspunkten getrennt sind, von denen jeder um einen Abstand des 0,2- bis 0,3-fachen der Breite (BW1 oder BW2) von einer der Gürtellagen (B1 oder B2) von dem Reifenäquator C zu beiden Seiten der Richtung der Reifenachse beabstandet ist.

2. Ein Luftreifen nach Anspruch 1, dadurch gekennzeichnet, daß die Anfangselastizität EA der Gürtelkorde des mittleren Gürtellagenteils BM größer ist als die Anfangselastizität EB der Gürtelkorde der anderen Gürtellagenteile BA und BS.

3. Ein Luftreifen nach Anspruch 2, dadurch gekennzeichnet, daß das Verhältnis EA/EB zwischen 2,0 und 4,0 liegt.

4. Ein Luftreifen nach Anspruch 1, 2 oder 3, dadurch gekennzeichnet, daß beide Lücken g1 und g2 zwischen 0,5 mm und 4 mm betragen.

5. Ein Luftreifen nach irgendeinem der Ansprüche 1 bis 4, gekennzeichnet durch eine Bandschicht (9) mit Bandverstärkungskorden aus einem organischen Fasermaterial, die radial außerhalb der Gürtelschicht (7) positioniert ist.

6. Ein Luftreifen nach Anspruch 5, dadurch gekennzeichnet, daß die Anfangselastizität EA die gleiche wie die Elastizität EB ist.

7. Ein Luftreifen nach Anspruch 5 oder 6, dadurch gekennzeichnet, daß die Bandschicht (9) eine oder mehr Schichten einer Spiralbandlage aufweist, die gebildet wird, indem Bandkorde spiralförmig gewickelt werden.

8. Ein Luftreifen nach Anspruch 5, 6 oder 7, dadurch gekennzeichnet, daß die Bandschicht (9) zwei oder mehr Schnittkantenlagen von Bandkorden aufweist, die in einem Winkel zwischen 30 Grad und 60 Grad gegen den Reifenäquator C mit beiden Schnittkanten geneigt sind.

## Revendications

1. Pneumatique comprenant une carcasse (6) partant d'une partie de bande de roulement (5) dans des flancs (4) et s'enroulant autour d'une tringle (2) dans chacun de deux talons (3), et une couche de ceinture (7) placée radialement à l'extérieur de la carcasse (6) dans la partie (5) de bande de roulement, la couche de ceinture (7) comprenant une première nappe B1 et une seconde nappe B2 disposées successivement depuis la carcasse (6), les largeurs BW1 et BW2 de la première et de la seconde nappe de ceinture dans la direction de l'axe ne dépassant pas la largeur TW de la bande de roulement qui est la distance comprise entre les bords externes de la bande de roulement (5) dans la direction de l'axe du pneumatique et l'une des nappes (B1 ou B2) étant divisée en deux parties BA de nappe de ceinture et étant composée de ces parties qui sont séparées par un espace g1 placé sur l'équateur C du pneumatique, caractérisé en ce que la largeur BW1 de la première nappe de ceinture est comprise entre 0,9 et 0,95 fois la largeur TW de la bande de roulement, la largeur BW2 de la seconde nappe de ceinture B2 est comprise entre 0,88 et 0,92 fois la largeur TW de la bande de roulement, et l'autre nappe de ceinture (B2 ou B1) est divisée en trois parties et composée de ces trois parties qui comprennent une partie médiane BM et deux parties latérales BS de nappe de ceinture qui sont séparées par d'autres espaces g2 placés en deux points de séparation séparés de l'équateur C du pneumatique par une distance comprise entre 0,2 et 0,3 fois la largeur (BW1 ou BW2) de l'une des nappes de ceinture (B1 ou B2) des deux côtés dans la direction de l'axe du pneumatique.

2. Pneumatique selon la revendication 1, caractérisé en ce que l'élasticité initiale EA des câblés de la partie médiane BM de la nappe de ceinture est supérieure à l'élasticité initiale EB des câblés des autres parties BA et BS de nappe de ceinture.

3. Pneumatique selon la revendication 2, caractérisé en ce que le rapport EA/EB est compris entre 2,0 et 4,0.

4. Pneumatique selon la revendication 1, 2 ou 3, caractérisé en ce que les espaces g1 et g2 sont compris entre 0,5 et 4 mm.

5. Pneumatique selon l'une quelconque des revendications 1 à 4, caractérisé par une couche (9) de bande comprenant des câblés de renforcement de bande formés d'une matière en fibres organiques, placée radialement à l'extérieur de la couche de ceinture (7).

6. Pneumatique selon la revendication 5, caractérisé en ce que l'élasticité initiale EA est égale à l'élasticité initiale EB.

7. Pneumatique selon la revendication 5 ou 6, caractérisé en ce que la couche (9) de bande comporte plusieurs couches de nappe de bande spiralée formées par enroulement de câblés de bande en spirale.

8. Pneumatique selon la revendication 5, 6 ou 7, caractérisé en ce que la couche (9) de bande comporte au moins deux nappes à bords coupés de câblés de bande inclinés d'un angle compris entre 30 et 60° par rapport à l'équateur C du pneumatique, les deux bords étant coupés.
